# EUROPEAN PATENT APPLICATION

(11) **EP 1 680 965 A1**
(43) Date of publication of application: **19.07.2006**
(21) Application number: 06250193.7
(22) Date of filing: 13.01.2006
(51) Int. Cl.: A23G 9/04, A23G 9/28

(54) **Apparatus for producing and dispensing a chilled or partially frozen beverage**

(30) Priority: 18.01.2005 US 37606
(71) Applicant: Main Power Electrical Factory Ltd., Kowloon, Hong Kong (CN)
(72) Inventor: Liu, Ka Lok Joe, Kowloon (CN)
(74) Representative: Jenkins, Richard Gavin

(57) **Abstract**

An apparatus for producing and dispensing a chilled or partially frozen beverage and a base and an outer receptacle provided on the base. An inner receptacle for receiving a cooling agent is removably located within the outer receptacle. The inner and outer receptacle walls define a beverage compartment for receiving a beverage to be chilled or partially frozen. A dispensing valve is located in or near the outer receptacle bottom for dispensing beverage from within the compartment. A rotational mixer in the beverage compartment is rotational in a first directing for stirring a beverage in the compartment and in an opposite direction for moving the beverage towards the dispensing valve.

## Description

The invention relates to an apparatus for producing and dispensing a chilled or partially frozen beverage. Such beverages are often referred to as a slushy beverage.

A variety of apparatus are available for producing and dispensing a chilled or partially frozen beverage. Such apparatus comprise a receptacle into which a beverage is placed and a refrigeration unit for cooling the beverage to a partially frozen state. A mixer in the receptacle mixes the beverage resulting in a slush beverage. A dispensing valve is provided for serving the slush beverage directly into a cup.

Such apparatus are designed for commercial use and are not typically suited for domestic purposes. A refrigeration unit is required for cooling the beverage and even a small refrigeration unit is large and creates considerable noise by domestic appliance standards.

It is an object of the present invention to provide an apparatus for producing and dispensing a chilled or partially frozen beverage that overcomes or ameliorates the above problem or that at least provides the public with a useful alternative.

It is a further object of the present invention to provide an apparatus for producing and dispensing a chilled or partially frozen beverage that is suitable for domestic use.

According to the invention there is provided an apparatus for producing and dispensing a chilled or partially frozen beverage, comprising:
a base,
an outer receptacle locatable on the base and having an outer receptacle wall and a bottom,
an inner receptacle for receiving a cooling agent, the inner receptacle removably located within the outer receptacle and having an inner receptacle wall, the inner and outer receptacle walls defining a beverage compartment for receiving a beverage to be chilled or partially frozen,
a dispensing valve in or near the outer receptacle bottom for dispensing beverage from within the beverage compartment, and
a mixer provided within the beverage compartment between the inner and outer receptacle walls for stirring a beverage in the beverage compartment.

Preferably, the beverage compartment surrounds the inner receptacle.

Preferably, the mixer is rotational about an axis in a first direction for stirring a beverage in the beverage compartment, and rotational about the axis in an opposite direction for pushing the beverage through the dispensing valve.

Preferably, the dispensing valve has a knob having closed and open positions, respectively closing the valve in the closed position and opening the valve in the open position, the knob engaging a switch to causing the mixer to rotate in the first direction when in the closed position and in the opposite direction when in the open position.

Preferably, the mixer comprises a hub mounted to rotate within the outer receptacle and a blade extending into the beverage compartment between the inner and outer receptacle walls.

Preferably, the blade scrapes the inner receptacle wall.

Preferably, the blade is aligned within the beverage compartment at an angle of between 0 degrees and 45 degrees to the axis, or at an angle of between 0 degrees and 10 degrees to the axis.

Preferably, the blade comprises a helix.

Preferably, the apparatus further includes a rotational blade provided in the inner receptacle for agitating the cooling agent.

Preferably, the inner receptacle wall is made of heat conductive material.

Preferably, the heat conductive material is one of aluminium or stainless steal.

Preferably, the apparatus further includes a removable lid comprising an annular portion for closing the beverage compartment and a circular portion for closing the inner receptacle, the annular and circular portions being removable separately or together.

Preferably, the annular portion includes an opening for allowing the introduction of a beverage into the beverage compartment without removing the lid.

Further aspects of the invention will become apparent from the following drawings and description.

Embodiments of the invention will now be described by way of example only and with reference to the accompanying drawings in which:
Figure 1 is a perspective view of an apparatus for producing and dispensing a chilled or partially frozen beverage,
Figure 2 is a side view of the apparatus,
Figure 3 is a perspective view of an upper part of the apparatus,
Figure 4 is a view of the central part of the apparatus showing the dispensing valve,
Figure 5 is a view of a second embodiment of a stirring mixer,
Figures 6 and 7 are cut-away perspective views of the receptacle and second embodiment of a stirring mixer, and
Figure 8 is a cut-away side view of the receptacle and second embodiment of a stirring mixer.

Referring to the drawings, an apparatus for producing and dispensing a chilled or partially frozen beverage includes a lower base unit 1 for supporting the apparatus on a flat surface. Mounted on the base 1 is a cylindrical outer receptacle 2 having an outer wall preferably made of clear glass or plastic material. Removably located within the outer receptacle 2 is an inner receptacle 3 for receiving a cooling agent such as a cooling Gel, rock salt, or ice. The inner receptacle 3 has an outer cylindrical wall. An annular shaped beverage chamber 4 is formed between the cylindrical wall of the outer receptacle 2 and the cylindrical wall of inner receptacle 3.

A dispensing valve 6 is located in the side wall of outer receptacle 2 near its bottom for dispensing beverage from within the receptacle.

The inner receptacle 3 is made from a heat conductive material such as aluminium or stainless steel for efficient transfer of heat energy between the cooling agent in the inner receptacle 3 and the beverage in the beverage compartment 4. If rock salt is used as the cooling agent then stainless steel is the preferred material for the inner receptacle 3. However, any heat conductive material can be used.

The inner reciprocal 3 is removable from the outer reciprocal 2 for cleaning and so that it can be recharged with cooling agent. When gel or ice are used as cooling agent the inner reciprocal 3 can be stored containing the cooling agent in a refrigerator prior to use.

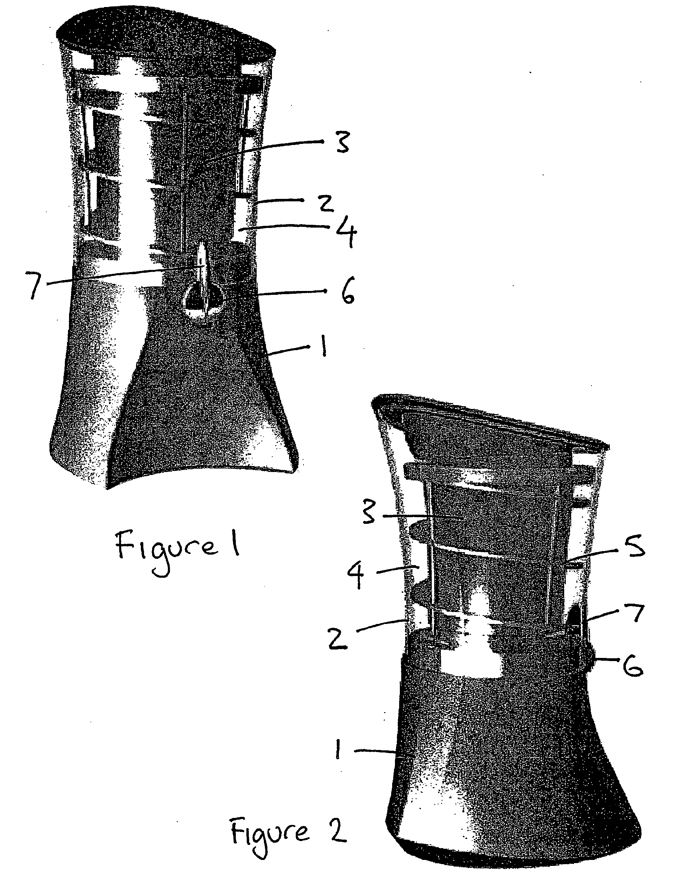

A mixer 5 is located within the beverage compartment 4. As shown in figures 1 through 4, in one embodiment the mixer is a helix that spirals up about the outer wall of inner receptacle 3. The mixer 5 scrapes the wall to remove of any frozen beverage which forms on the outside of inner receptacle 3.

A motor, not shown, is located within the base 1 for driving the mixer 5 in a forward or a reverse direction. The forward direction is for stirring the beverage as it cools and scraping frozen beverage from the wall of inner receptacle 3. The reverse direction is for pushing the partially frozen slush beverage towards and out of the dispensing valve 6.

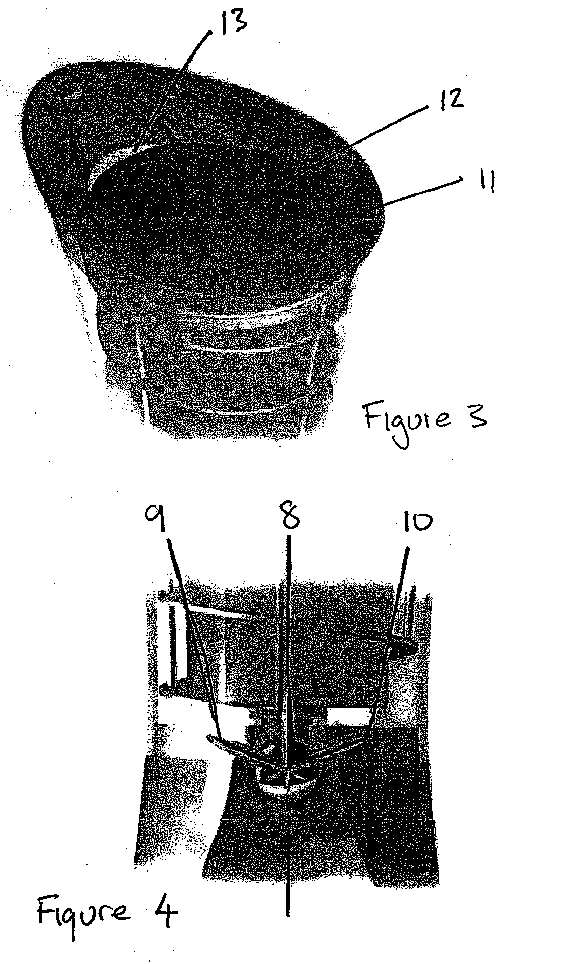

Dispensing valve 6 has a knob 7 having three rotational positions as illustrated in figure 4. The knob 7 is operable to start the motor by engaging micro-switches, which are not shown. In the first central position 8 the valve 6 is closed and the motor is not operating. In the second, producing, position 9 the valve 6 is closed and a first micro-switch is engaged to cause rotation of the mixer in the forward, stirring, direction. In the third, dispensing, position 10 the valve is open and a second micro-switch is engaged to cause rotation of the mixer in the reverse, dispensing, direction for moving the partially frozen slush beverage towards and out of the open dispensing valve 6.

A lid is provided for closing the top of the outer and inner receptacles 2, 3. The lid includes an outer annular ring portion 11 and an inner circular portion 12 which locates within the annular portion 11. The annular portion locates between the wall upper lips of the outer and inner receptacles 2, 3 to close the beverage compartment 4. The circular portion 12 fits within the annular portion 11 over the inner receptacle 3 to close it and seal in the cooling agent. The annular portion 11 has an upwardly extending lip with an opening 13 so that a beverage can be introduced into the beverage compartment 4 while the lid portions 11, 12 are in place.

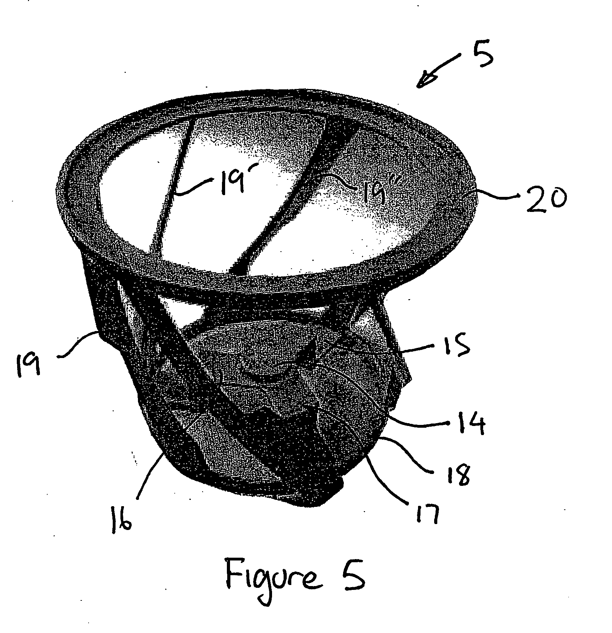

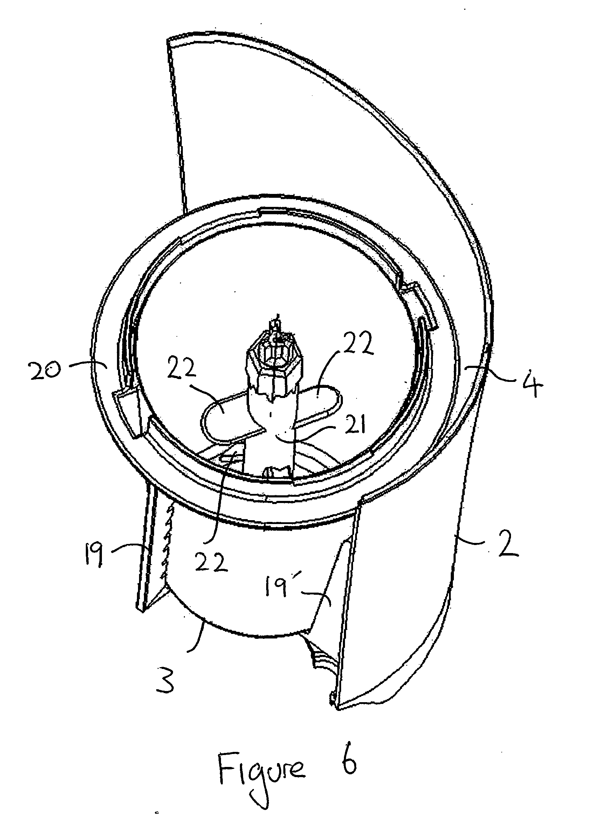

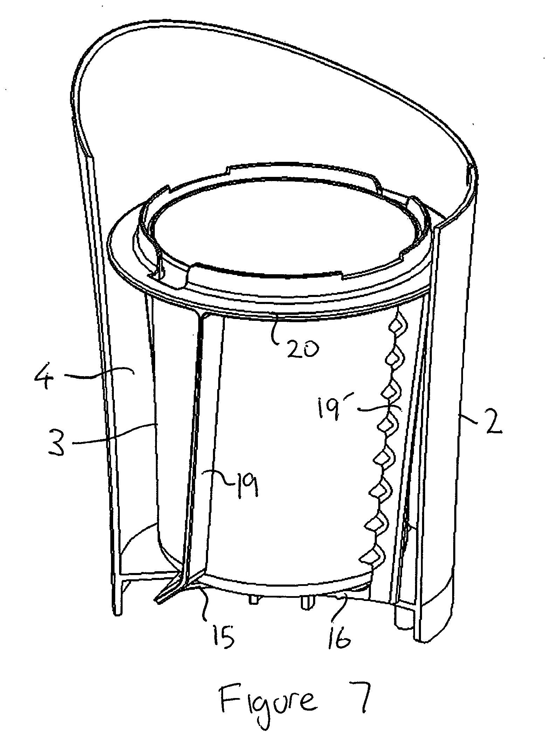

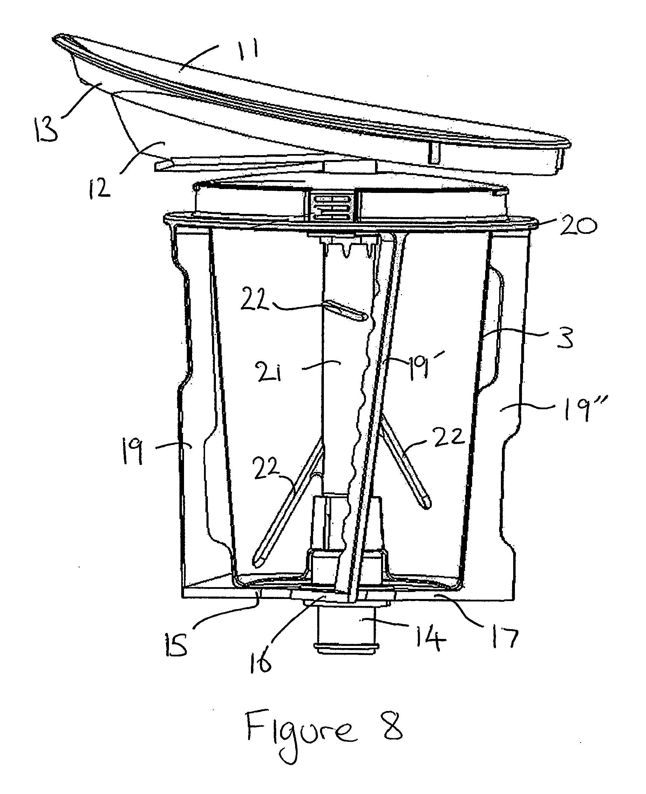

Figure 5 to 8 illustrates another embodiment of the mixer 5. It comprises a hub 14 with three radially extending arms 15, 16, 17 extending to a concentric annual ring 18. The hub 14 and ring 18 locate on the bottom of outer reciprocal 2. Extending upwardly from the ring 18 are a plurality of blades 19. The blades 19 extend into the beverage compartment 4. As with the helical mixer, the blades 19 scrape the wall of inner reciprocal 3 to remove of any frozen beverage which forms on it. The tops of the blades 19 are joined by a second annular ring 20. The blades 19 extend upwardly at an angle of about 10 degrees to the vertical or axis of rotation of the mixer. Preferably, this angle is between zero and 45 degrees for optimum performance.

In an alternative embodiment a rotational spindle 21 extends into inner receptacle 3 from the base. A plurality of blades 22 extend radially from the spindle 21 and are caused to rotate with the beverage compartment. The inner receptacle blades 22 agitate the cooling agent. This agitation improves the cooling effect of salt or ice cooling agents. Provision of blades 22 within a removable receptacle 3 can be achieved in such known manner as in drink blenders and the like.

Where in the foregoing description reference has been made to integers or elements having known equivalents then such are included as if individually set forth herein.

Embodiments of the invention have been described, however it is understood that variations, improvement or modifications can take place without departure from the spirit of the invention or scope of the appended claims.

## Claims

1. An apparatus for producing and dispensing a chilled or partially frozen beverage, comprising:
a base,
an outer receptacle locatable on the base and having an outer receptacle wall and a bottom,
an inner receptacle for receiving a cooling agent, the inner receptacle removably located within the outer receptacle and having an inner receptacle wall, the inner and outer receptacle walls defining a beverage compartment for receiving a beverage to be chilled or partially frozen,
a dispensing valve in or near the outer receptacle bottom for dispensing beverage from within the beverage compartment, and
a mixer provided within the beverage compartment between the inner and outer receptacle walls for stirring a beverage in the beverage compartment.

2. The apparatus of claim 1 wherein the beverage compartment surrounds the inner receptacle.

3. The apparatus of claims 1 or 2 wherein the mixer is rotational about an axis in a first direction for stirring a beverage in the beverage compartment, and rotational about the axis in an opposite direction for pushing the beverage through the dispensing valve.

4. The apparatus of claim 3 wherein the dispensing valve has a knob having closed and open positions, respectively closing the valve in the closed position and opening the valve in the open position, the knob engaging a switch to causing the mixer to rotate in the first direction when in the closed position and in the opposite direction when in the open position.

5. The apparatus of any preceding claim wherein the mixer comprises a hub mounted to rotate within the outer receptacle and a blade extending into the beverage compartment between the inner and outer receptacle walls.

6. The apparatus of claim 5 wherein the blade scrapes the inner receptacle wall.

7. The apparatus of claims 5 or 6 wherein the blade is aligned within the beverage compartment at an angle of between 0 degrees and 45 degrees to the axis.

8. The apparatus of claims 5 or 6 wherein the blade is aligned within the beverage compartment at an angle of between 0 degrees and 10 degrees to the axis.

9. The apparatus of any one of claims 3 to 8 wherein the blade comprises a helix.

10. The apparatus of any preceding claim further including a rotational blade provided in the inner receptacle for agitating the cooling agent.

11. The apparatus of any preceding claim wherein the inner receptacle wall is made of heat conductive material.

12. The apparatus of claim 11 wherein the heat conductive material is one of aluminium or stainless steal.

13. The apparatus of any preceding claim further including a removable lid comprising an annular portion for closing the beverage compartment and a circular portion for closing the inner receptacle, the annular and circular portions being removable separately or together.

14. The apparatus of claim 13 wherein the annular portion includes an opening for allowing the introduction of a beverage into the beverage compartment without removing the lid.
